# EUROPEAN PATENT SPECIFICATION

(11) **EP 2 930 139 B1**
(45) Date of publication and mention of the grant of the patent: **01.02.2017**
(21) Application number: 14163950.0
(22) Date of filing: 08.04.2014
(51) Int. Cl.: B67C 3/20, G01G 3/15, G01G 17/06

(54) **A container filling machine provided with an improved weighing device and related weighing method**
Gefäßfüllmaschine mit verbesserter Wiegevorrichtung und zugehöriges Wiegeverfahren
Machine de remplissage de récipients avec un dispositif de pesage amélioré et procédé de pesage associé

(43) Date of publication of application: 14.10.2015
(73) Proprietor: Sidel S.p.a. Con Socio Unico, Parma (IT)
(72) Inventor: Cocchi, Enrico, 43100 Parma (IT); Guerra, Riccardo, 43100 Parma (IT)
(74) Representative: Siloret, Patrick

(56) References cited:
- DE-A1- 2 853 999
- US-A- 3 785 447
- US-A- 4 765 421
- US-A- 6 073 667
- US-B1- 6 220 312
- ERDEM U ET AL: "Force and weight measurement", JOURNAL OF PHYSICS E. SCIENTIFIC INSTRUMENTS, IOP PUBLISHING, BRISTOL, GB, vol. 15, no. 9, 1 September 1982 (1982-09-01), pages 857-872, XP020016901, ISSN: 0022-3735, DOI: 10.1088/0022-3735/15/9/002

## Description

The present invention relates to a filling machine, designed for filling containers with a fluid product, for example a pourable food product. In particular, the present invention relates to a filling machine provided with an improved weighing device, designed for measuring weight of a container being filled, and to a related weighing method.

In the field of bottling of fluids, like pourable food products, in containers, like plastic or glass bottles or aluminum cans, a system is known comprising a feed line for feeding a succession of empty containers to a filling machine, in turn comprising a rotating conveyor (so called "carousel"), carrying a number of filling units. The filling units are mounted to rotate continuously about a longitudinal axis, engage the empty containers, fill the containers with the desired product, and then feed the containers to a capping machine, which is coupled to the filling machine by at least one transfer wheel and which closes the containers with respective caps.

Control of the level of fluid in the containers being filled is an important feature of the filling machine, to assure that the containers are filled at a desired and repeatable level.

Level control is achieved during filling operations by means of suitable measuring arrangements, which may include flowmeters, designed to measure the flow of the fluid fed in the containers from the filling units; visual inspection devices, designed to provide a visual monitoring of the fluid level in the containers; and/or weighing devices, designed to sense the progressively increasing weight of the containers, while filling operations are performed.

In particular, a known weighing device includes a load cell, which is designed to be coupled to the container and to the rotating carousel of the filling machine.

The load cell generally includes a flexible supporting arm, cantilevered from the rotating carousel and carrying the container at a free end thereof. The supporting arm is generally provided with off-center capability, in order to automatically compensate for different values of torque, due to different placement of the container, or a different inclination thereof (e.g. due to centrifugal effects during rotation of the rotating carousel of the filling machine).

The supporting arm of the load cell is integrally provided with sensors or transducers, generally including strain gages or similar sensing elements, which are designed to undergo a stress when the supporting arm is elastically deformed by the increasing weight of the container; the measured stress may be used as an indication of the weight value, by a suitably provided control electronics (which may also control filling operations, and in particular may be designed to stop filling, when a desired weight value is reached).

Known filling machines, including load cells, are for example disclosed in documents EP 1 025 424 B2 or EP 1 534 621 B1.

US 6 220 312 B1 is disclosing a filling machine according to the preamble of claim 1.

The Applicant has realized that known weighing devices in filling machines pose some concerns in the design of the same filling machines.

In particular, it is known that in the beverage field, an important issue relating to filling machines, at least in particular applications, is that of ensuring proper hygienic conditions during filling operations. In this respect, it is known that safety rules have to be complied with, as well as guidelines for proper operations are to be followed (e.g. those issued by the European Hygienic Engineering and Design Group - EHEDG), for example when filling is performed with an aseptic pourable food product, e.g. with a delicate product which cannot be added with a substantial amount of preservative substances.

In particular, inside an aseptic environment, such as the one that may have to be ensured for filling operations, some requirements have to be met, such as: the protection of electrical connectors has to meet the IP69K safety standards; the level of electrical noise has to be kept under a low threshold; maintenance time has to be short.

The Applicant has realized that weighing devices of a known type may not prove fully satisfactory as far as these requirements are concerned.

For example, standard weighing devices have strain gauges, respectively gages, or similar sensing elements, attached (e.g. glued) on the mechanical support element, and electrical wires to be connected thereto. Design of the electrical connections may thus prove to be a difficult task in current systems, if hygienic requirements are to be satisfied.

Moreover, electrical elements and connections may even break due to the mechanical stresses generated in the weighing device; also, analog signals generated by strain gages or similar elements are generally of a very low value and thus subject to environmental electrical noise and thermal noise.

A proper implementation of the off-center capability of the load cell, and its coupling to the rotating carousel, may entail complex and expensive mechanical arrangements, e.g. using articulated parallelograms or similar structures, which may be difficult to achieve, while at a same time satisfying the desired electrical requirements.

US 6 073 667 A discloses a method and a device for weight-filling a receptacle, which is carried, suspended at a neck thereof, by a holding bar, cantilevered from a structure of a filling machine. The holding bar carries a strain gauge, in order to detect deformation due to the weight of the receptacle being filled, and has offcenter capability, having a central elongated through slot.

Erdem U et al. "Force and weight measurement", Journal of Physics E. Scientific Instruments, IOP Publishing, Bristol, GB, vol. 15, no. 9, 1 September 1982, pages 857-872, discusses a number of possibilities for force and weight measurement, using various types of transducers, such as an electromagnetical distance transducer (of the LVDT type), an elastic load-bearing member, force sensitive toroidal cores.

The aim of the present solution is consequently to solve, at least in part, the problems previously highlighted, and in general to provide an improved solution for a filling machine, particularly with respect to weighing of containers being filled.

According to the present solution, a filling machine is thus provided, as defined in the appended claims.

For a better understanding of the present invention, preferred embodiments thereof are now described, purely by way of a non-limiting example, with reference to the attached drawings, wherein:
- Figure 1 is a schematic overall view of a filling machine, wherein the present solution may be applied;
- Figure 2 is a schematic representation of a weighing device for a filling unit of the filling machine, according to a possible embodiment of the present solution;
- Figure 3 is a schematic electronic block diagram of an electronic part of the weighing device of Figure 2;
- Figure 4 is a circuit depiction of a sensing element in the weighing device of Figure 2; and
- Figures 5 and 6 are schematic representations of a sensing part of the weighing device, according to respective, different, embodiments of the present solution.

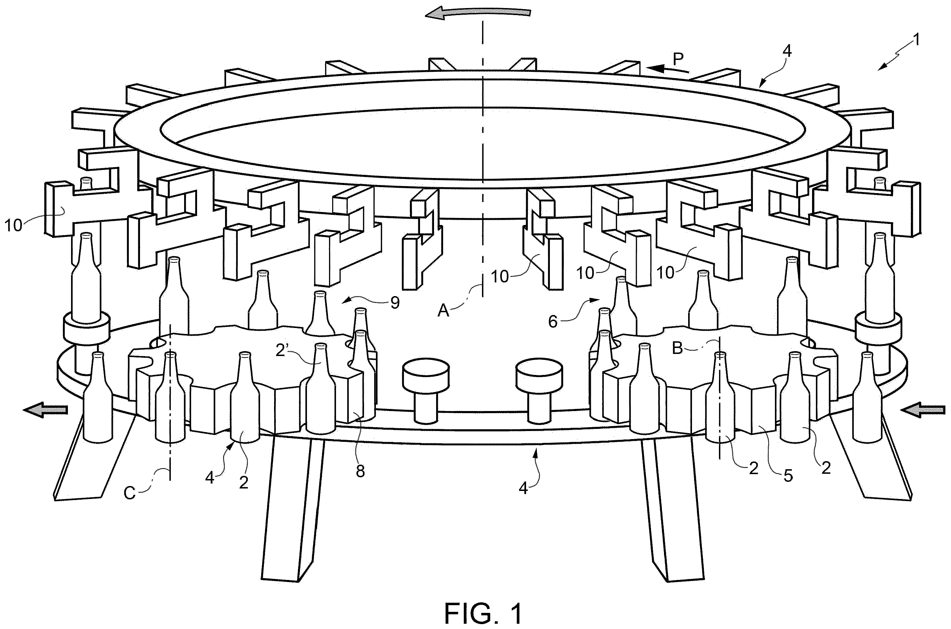

Figure 1 schematically shows a machine, denoted as a whole with 1, for filling containers 2, for example glass or plastic bottles or aluminum cans, with a filling fluid, for example a pourable food product.

Filling machine 1 comprises a conveying device, including a rotating conveyor (or carousel) 4, which is mounted to rotate continuously (anticlockwise in Figure 1) about a substantially vertical longitudinal axis A.

The rotating conveyor 4 receives a succession of empty containers 2 from an input wheel 5, which is coupled thereto at a first transfer station 6 and is mounted to rotate continuously about a respective vertical longitudinal axis B, parallel to axis A.

The rotating conveyor 4 releases a succession of filled containers 2 to an output wheel 8, which is coupled thereto at a second transfer station 9 and is mounted to rotate continuously about a respective vertical longitudinal axis C, parallel to axes A and B.

Filling machine 1 comprises a number of filling units 10, which are equally spaced about axis A, are mounted along a peripheral edge of rotating conveyor 4, and are moved by the same rotating conveyor 4 along a path P extending about axis A and through transfer stations 6 and 9.

Each filling unit 10 is designed to receive at least one container 2 to be filled, and to perform, during its rotation along path P, a number of filling operations according to a filling "recipe", in order to fill the container 2 with a fluid (e.g. a carbonated liquid).

In particular, the filling unit 10 is configured to engage the container 2, at an opening of a neck 2' thereof, and includes one or more fluidic conduits and flow regulators (here not shown), which are designed to selectively couple the container 2 to one or more feed devices, or product tanks, of the filling machine 1 (here not shown).

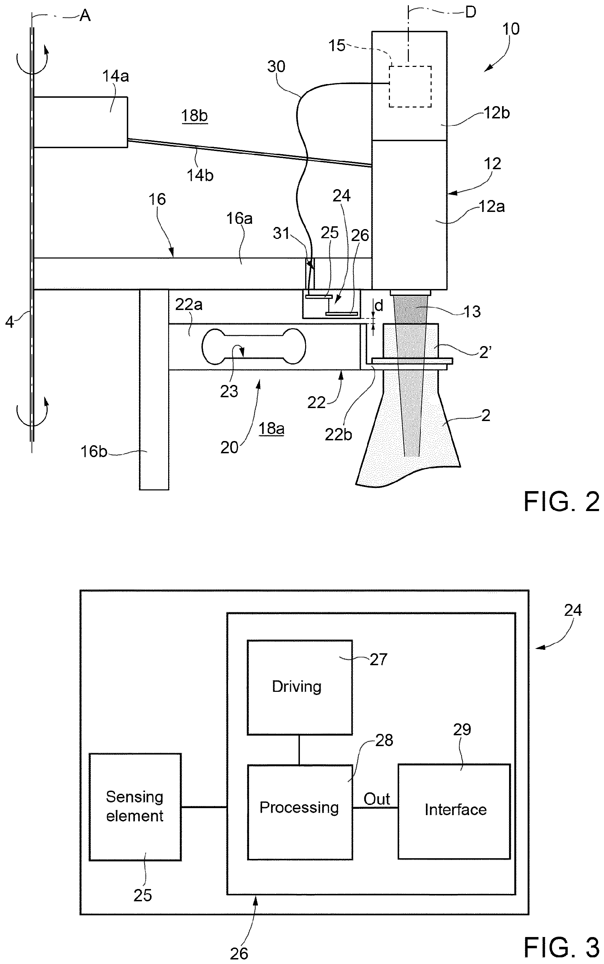

In more details, and as shown in Figure 2 (which is not drawn to scale), each filling unit 10 includes a main body 12, having a vertical extension along a longitudinal axis D, that is substantially parallel to axis A of rotating conveyor 4.

The main body 12 has a bottom part 12a, which is mechanically coupled to the rotating conveyor 4, internally defines the filling conduits and flow regulators (here not shown) for a pourable filling product, here denoted with 13, and includes a container receiving part, designed to receive the neck 2' of the container 2 that is to be filled. In the embodiment shown, bottom part 12a is coupled to a product feed line 14a, originated from a product tank 14b coupled to the rotating conveyor 4.

The main body 12 also has an upper part 12b, which houses an electronic control unit 15 (shown schematically), designed to control operation of the filling unit 10 (e.g. controlling the flow regulators, based on the desired filling plan); electronic control unit 15 is provided in a printed circuit board.

In a known manner, here not shown in detail, the portion of the rotating conveyor 4, to which the filling unit 10 is coupled, also defines, or is integrally provided with, a barrier structure 16, which divides and fluidically isolates and separates an aseptic area 18a of the filling machine 1, wherein aseptic conditions are preserved and where containers 2 are filled with the filling product 13, from a non-aseptic area 18b of the same filling machine 1.

In the exemplary embodiment schematically shown in Figure 2, the barrier structure 16 includes an horizontal wall 16a, fixed to a plane or a horizontal table of rotating conveyor 4 (transversal to axis A) and coupled to the filling unit 10 at one end thereof; and a vertical wall 16b, joined to the horizontal wall 16a at a distance from the filling unit 10 and having a longitudinal extension parallel to axis A, at an opposite end of the horizontal wall 16a with respect to the same filling unit 10. Hydraulic separation means, here not shown, may generally be provided, to ensure proper separation of the aseptic area 18a from the non-aseptic area 18b.

According to an aspect of the present solution, the filling machine 1 includes a weighing device 20, configured to allow weighing of the container 2 being filled by the filling unit 10.

In a possible embodiment, filling machine 1 includes a number of weighing devices 20, each one operatively coupled to a respective filling unit 10.

Weighing device 20 includes a support unit 22, having a supporting arm 22a coupled to the rotating conveyor 4 at one end thereof, in particular to vertical wall 16b of the barrier structure 16. The supporting arm 22a is moreover coupled, at an opposite end, to a gripping element 22b, which is designed to grip the neck 2' of the container 2, thus holding and supporting it during filling operations. Supporting arm 22a extends below the horizontal wall 16a of the barrier structure 16, thus within the aseptic area 18a, so that the supported container 2 is located below the respective filling unit 10.

Supporting arm 22a is flexible and elastically deformable, as a function of the increasing weight of the container 2 being filled.

In a possible embodiment, supporting arm 22a has off-center capability, so as to provide automatic torque compensation (in the schematic depiction of Figure 2, supporting arm 22a is shown having a suitably shaped internal recess 23); in other words, deformation of supporting arm 22a is dependent only on the load, or weight of the container 2, and not on the resulting torque generated by the same load.

Supporting arm 22a is advantageously designed to be EHEDG compliant, i.e. designed according to hygienic requirements established by the European Hygienic Engineering & Design Group.

Weighing device 20 moreover includes a sensing unit 24, which is configured to provide weighing information related to the weight of the container 2 being filled.

According to an aspect of the present solution, sensing unit 24 is configured to provide a contactless position sensing, so as to provide a measure of a distance d of supporting arm 22a from a facing portion of the rotating conveyor 4 (in the example, from the horizontal wall 16a of barrier structure 16), whereby the weight of the container 2 is a function of this distance d.

As schematically shown also in Figure 3, the sensing unit 24 includes, for example encapsulated within a plastic housing: a sensing element 25, which is configured to sense the position of supporting arm 22a; and an electronic circuit 26, coupled to the sensing element 25.

Electronic circuit 26 includes: a driving circuitry 27, which is configured to drive the sensing element 25; a processing circuitry 28, which is configured to generate an output signal Out, preferably of a digital type, related to the sensed position; and an interface 29, which is configured to interface with an output system, in particular with the electronic control unit 15 of the filling unit 10, to provide thereto a measure of the sensed position (or distance d).

In a possible embodiment, interface 29 is of a digital type, for example including an SPI (Serial Parallel Interface) digital interface, capable of high speed operation.

According to an aspect of the present solution, the sensing element 25 operates based on the principle of electromagnetic inductive coupling.

Moreover, sensing element 25 is directly coupled to a surface of the rotating conveyor 4 (in particular, of the horizontal wall 16a of barrier structure 16), facing the supporting arm 22a, in the example in the proximity of the region of coupling of the same supporting arm 22a with the gripping element 22b.

Electrical wires and connectors, schematically shown as 30, connecting the sensing unit 24 to the external environment, in particular to the filling unit 10 (to provide output signal Out) and to a power supply system (here not shown), reach the same sensing unit 24 through a hole or passage 31 traversing the rotating conveyor 4 (in particular, formed through the horizontal wall 16a of barrier structure 16).

Advantageously, electrical wires and connectors 30 are thus not present in the aseptic area 18a of the filling machine 1, but extend only in the non-aseptic area 18b of the same filling machine 1.

In a possible embodiment, the sensing element 25 is configured to sense the effects due to the generation of circulating currents (so called eddy currents), as a consequence of a magnetic field.

In this case, supporting arm 22a includes a non-magnetic conductive material, for example a stainless steel or aluminum material.

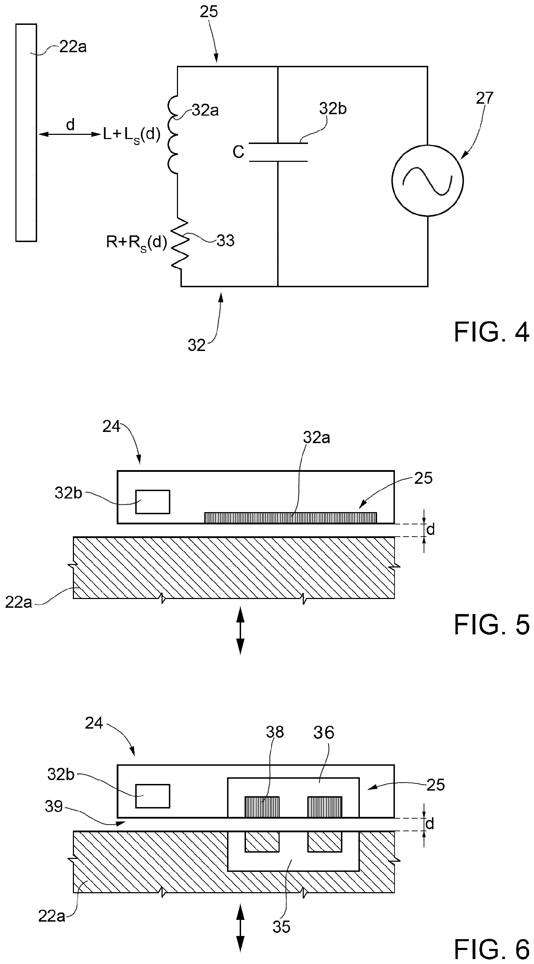

The sensing element 25, as also shown in the schematic diagrams of Figures 4 and 5, includes an LC resonator 32 (also defined LC resonant tank) formed by an inductor coil 32a, having inductance L, and a parallel capacitor 32b, having capacitance C, which may conveniently be integrated in a printed circuit board - PCB, together with the electronic circuit 26.

The LC resonator 32 is driven to oscillate at its natural resonance frequency by the driving circuitry 27 (here schematically represented as an oscillator circuit), in order to generate an AC current flowing in the inductor coil 32a. This current generates a magnetic field, which, in turn, induces eddy currents within the conductive material of the supporting arm 22a, which is arranged in the vicinity of the same LC resonator 32.

The magnitude of the eddy currents is a function of the distance d between the supporting arm 22a and the LC resonator 32 (that is coupled to the rotating conveyor 4), which varies due to deformation of the same supporting arm 22a (as shown by the arrow in Figure 5).

Eddy currents generate their own magnetic field, which influences and modifies the original magnetic field generated by the inductor coil 32a, introducing a parasitic inductance Lₛ, which varies the original inductance value L, as a function of distance d.

As shown schematically, also the value of a series resistor 33, having resistance R, is modified by the presence of the eddy currents, again with a parasitic component Rₛ being a function of distance d.

Processing circuitry 28 in this case monitors the change of value of the inductance of inductor coil 32a and the resistance of resistor 33, by monitoring both of the following parameters: the resonance frequency of the LC resonator 32 (which is influenced by the change in the inductance value); and the power required to maintain an oscillation amplitude having a constant value (which is influenced by the change in the series resistance value).

Processing circuitry 28 thereby provides output signal Out (which may be of a digital type), carrying information about distance d, to the interface 29, which in turns provides this information to the external electronic control unit 15 of filling unit 10.

In a manner not discussed in detail, the same electronic control unit 15 may process output signal Out, e.g. via linearization, filtering, amplification, and a proper conversion to a weight value.

In a possible alternative embodiment, sensing unit 24 is configured to provide an electromagnetic transformer, and to sense the variation in inductance due to inductive coupling with the supporting arm 22a.

In this case, and as schematically shown in Figure 6, the supporting arm 22a includes a magnetic region 35, including a ferromagnetic material or a ferrite; sensing element 25, coupled to the rotating conveyor 4 (for example being fixed to the horizontal wall 16a of barrier structure 16) here includes a magnetic core 36, of a ferromagnetic material or a ferrite, and a winding coil 38, separated from the magnetic region 35 via an air gap 39, whose value is a function of distance d.

Winding coil 38 is driven by the driving circuitry 27, and processing circuitry 28 is here configured to monitor the change in the electrical characteristics of the same winding coil 38 (e.g. in terms of an overall coil inductance), as a function of distance d and the change in the air gap 39, thus generating output signal Out.

It is underlined that in any case no electrical parts or components are provided in, or coupled to, the supporting arm 22a in the aseptic area 18a of the filling machine 10, and electrical connection 30 to the sensing unit 24 is achieved entirely through the non-aseptic area 18b; in other words, the support unit 22 is purely of a mechanical type and does not include any electronic part or component.

The advantages that the described solution allows to achieve are clear from the foregoing description.

In particular, it is again underlined that the electronic components and electrical connections may be integrated and entirely arranged within the non aseptic region 18b of the filling machine 1, coupled to the rotating conveyor 4 thereof.

The support unit 20, carrying the container 2 being filled, may thus be a simple mechanical part, without any sensing element (such as strain gages), electronic parts or electrical wires.

Therefore, design of the support unit 20 is simpler and compliance to hygienic requirements more convenient; for example, support unit 22, and recess 23 of related supporting arm 22a, may conveniently be designed with rounded edges and without plane surfaces, where bacteria or other pathologic elements could gather.

Replacement of the same support unit 22, for example in order to accommodate different type of containers 2 or to correct faults, becomes very simple, since no electrical connections are to be interrupted and/or replaced; maintenance time may thus be reduced.

Moreover, sensing unit 24 is not subject to mechanical stress generated in the supporting arm 22a and thus is not subject to breaking or damages during filling operations.

Sensing becomes also less affected by noise and external electrical disturbances; indeed, inductive sensing and use of a digital interface guarantee signal integrity and intrinsic noise reduction, both with respect to thermal and environmental noise; a higher resolution may thus be achieved in weight measurement and consequently more efficient and reliable filling operations may be performed.

Finally, it is clear that modifications and variations may be applied to the solution described and shown.

For example, it is underlined that other types of contactless position sensors could be used in the sensing unit 24, e.g. using a laser interferometer or laser triangulation.

Moreover, the support unit 20 and related supporting arm 22a could have a different structure and conformation, in any case being deformable as a function of the container weight.

Also, it is clear that the discussed solution may advantageously be used also for different kind of containers, e.g. PET containers, to be filled and/or different kind of filling fluids, e.g. different from food products.

## Claims

1. A filling machine (1) including: a rotating conveyor (4); at least one filling unit (10), carried by the rotating conveyor (4) and designed to engage at least one container (2) to carry out filling thereof with a fluid product (13); and a weighing device (20), operatively coupled to the filling unit (10) to provide weighing information related to a weight of the container (2) during its filling; wherein the weighing device (20) includes: a support unit (22), having a supporting arm (22a) designed to hold the container (2) and to be elastically deformed as a function of the weight of the container (2) being filled; and a sensing unit (24), designed to provide a measure related to the weight of the container,
wherein the sensing unit (24) includes a sensing element (25) and is configured to provide a contactless sensing associated to a distance (d) of supporting arm (22a) from a facing portion of the filling machine (1), the weight of the container (2) being a function of said distance (d),
**characterized in that** a portion of the rotating conveyor (4), to which the filling unit (10) is coupled, defines a barrier structure (16), which separates a first area (18a) of the filling machine (1) from a second, distinct, area (18b) of the filling machine (1), the sensing element (25) being coupled to the barrier structure (16) facing the supporting arm (22a); and wherein electrical connection (30) to the sensing unit (24) is provided through a passage (31) traversing the barrier structure (16), thereby extending solely in the second area (18b) and not in the first area (18a).

2. The machine according to claim 1, wherein the sensing unit (24) is configured to operate based on electromagnetic inductive coupling.

3. The machine according to claim 2, wherein the sensing element (25) includes an inductor coil (32a) for generation of a magnetic field, and the sensing unit (24) is configured to sense electromagnetic effects due to eddy currents generated in the supporting arm (22a), the supporting arm (22a) including a conductive material.

4. The machine according to claim 3, wherein the sensing element (25) further includes a parallel capacitor (32b) coupled to the inductor coil (32a) to form an LC resonator (32); the sensing unit (24) including a driving circuitry (27), configured to drive at its resonance frequency said LC resonator (32), thus generating the magnetic field.

5. The machine according to claim 2, wherein the sensing unit (24) is configured to provide an electromagnetic transformer, and to sense the variation in an inductance thereof, as a function of the elastic deformation of the supporting arm (22a), the supporting arm (22a) including a region (35) of a ferromagnetic material or a ferrite.

6. The machine according to claim 5, wherein the sensing element (25) includes a magnetic core (36) with a winding coil (38), separated from the magnetic region (35) via an air gap (39), whose value is a function of said distance (d).

7. The machine according to any of the preceding claims, wherein the first area (18a) is an area where aseptic conditions are to be preserved and where the container (2) is to be filled with the product (13); and wherein the second area (18b) is a non-aseptic area.

8. The machine according to any of the preceding claims, wherein the support unit (22) is of a purely mechanical type and does not include any electronic parts or components.

9. The machine according to any of the preceding claims, wherein the filling unit (10) includes a control unit (15) configured to control operations of filling of said container (2); and wherein the sensing unit (24) includes an interface (29) configured to interface with the control unit (15) of the filling unit (10) and to provide thereto the weighing information related to the weight of the container (2).

10. The machine according to claim 9, wherein the interface (29) is of a digital type, including an SPI (Serial Parallel Interface) digital interface.

11. The machine according to claim 9 or 10, wherein said weighing information include a measure of distance (d), and the control unit (15) is configured to determine the weight of the container (2) as a function of said distance (d).

12. The machine according to any of the preceding claims, wherein the supporting arm (22a) has off-center capability, so as to provide automatic torque compensation, and is coupled to the rotating conveyor (4) at one end thereof, and carries, at an opposite end, a gripping element (22b), which is designed to grip a neck (2'). of the container (2), thus holding and supporting it during filling operations.

13. The machine according to any of the preceding claims, including a number of filling units (10) carried by the rotating conveyor (4), and a corresponding number of respective weighing devices (20).

14. The machine according to claim 13, wherein the rotating conveyor (4) is mounted to rotate about a longitudinal axis (A), and carries the filling units (10) at its periphery, the filling units (10) being designed to be moved along a path (P) by the rotation of the rotating conveyor (4).

## Patentansprüche

1. Füllmaschine (1), welche Folgendes einschließt:
einen Rotationsförderer (4); mindestens eine Fülleinheit (10), die durch den Rotationsförderer (4) getragen wird und konzipiert ist, um mit mindestens einem Behälter (2) in Eingriff zu kommen, um diesen mit einem fließfähigen Produkt (13) zu füllen; und eine Wiegevorrichtung (20), die in Wirkbeziehung an die Fülleinheit (10) gekoppelt ist, um Wiegeinformationen in Bezug auf ein Gewicht des Behälters (2) während seines Füllens bereitzustellen; wobei die Wiegevorrichtung (20) Folgendes einschließt: eine Trageeinheit (22) mit einem Tragarm (22a), der zum Halten des Behälters (2) und zum elastischen Verformen als Funktion des Gewichtes des Behälters (2), welcher gefüllt wird, konzipiert ist; sowie eine Abfühleinheit (24), die zum Bereitstellen eines Maßes konzipiert ist, das mit dem Gewicht des Behälters in Beziehung steht,
wobei die Abfühleinheit (24) ein Abfühlelement (25) einschließt und zum Bereitstellen einer kontaktlosen Abfühlung konfiguriert ist, die mit einem Abstand (d) des Tragarms (22a) von einem zugewandten Abschnitt der Füllmaschine (1) assoziiert ist, wobei das Gewicht des Behälters (2) eine Funktion dieses Abstands (d) ist,
**dadurch gekennzeichnet, dass** ein Abschnitt des Rotationsförderers (4), an den die Fülleinheit (10) gekoppelt ist, eine Barrierestruktur (16) definiert, die einen ersten Bereich (18a) der Füllmaschine (1) von einem zweiten eigenen Bereich (18b) der Füllmaschine (1) trennt, wobei das Abfühlelement (25) an die Barrierestruktur (16) gekoppelt ist, die dem Tragarm (22a) zugewandt ist; und wobei durch einen Durchgang (31), welcher die Barrierestruktur (16) quert, eine elektrische Verbindung (30) zu der Abfühleinheit (24) bereitgestellt wird, wodurch sie sich nur in den zweiten Bereich (18b) und nicht in den ersten Bereich (18a) erstreckt.

2. Maschine nach Anspruch 1, wobei die Abfühleinheit (24) zum Betrieb basierend auf elektromagnetischer induktiver Kopplung konfiguriert ist.

3. Maschine nach Anspruch 2, wobei das Abfühlelement (25) eine Induktorspule (32a) zum Generieren eines Magnetfelds einschließt und die Abfühleinheit (24) zum Abfühlen von elektromagnetischen Effekten durch Wirbelströme konfiguriert ist, die in dem Tragarm (22a) generiert werden, wobei der Tragarm (22a) ein leitfähiges Material einschließt.

4. Maschine nach Anspruch 3, wobei das Abfühlelement (25) ferner einen Parallelkondensator (32b) einschließt, der an die Induktorspule (32a) gekoppelt ist, um einen LC-Schwingkreis (32) zu bilden; wobei die Abfühleinheit (24) einen Treiberschaltkreis (27) einschließt, der zum Antreiben des LC-Schwingkreises (32) auf seiner Resonanzfrequenz konfiguriert ist, wodurch das Magnetfeld generiert wird.

5. Maschine nach Anspruch 2, wobei die Abfühleinheit (24) konfiguriert ist, um einen elektromagnetischen Transformator bereitzustellen, und die Variation in einer Induktivität dessen als Funktion der elastischen Verformung des Tragarms (22a) abzufühlen, wobei der Tragarm (22a) eine Region (35) eines ferromagnetischen Materials oder eines Ferrits einschließt.

6. Maschine nach Anspruch 5, wobei das Abfühlelement (25) einen Magnetkern (36) mit einer Wickelspule (38) einschließt, die von der magnetischen Region (35) durch einen Luftspalt (39) getrennt ist, deren Wert eine Funktion des Abstands (d) ist.

7. Maschine nach einem der vorhergehenden Ansprüche, wobei der erste Bereich (18a) ein Bereich ist, in dem aseptische Bedingungen aufrecht zu erhalten sind, und wo der Behälter (2) mit dem Produkt (13) zu füllen ist, und wobei der zweite Bereich (18b) ein nicht aseptischer Bereich ist.

8. Maschine nach einem der vorhergehenden Ansprüche, wobei die Trageinheit (22) von einem rein mechanischen Typ ist und keine elektronischen Teile oder Komponenten einschließt.

9. Maschine nach einem der vorhergehenden Ansprüche, wobei die Fülleinheit (10) eine Steuereinheit (15) einschließt, die zum Steuern von Füllvorgängen des Behälters (2) konfiguriert ist; und wobei die Abfühleinheit (24) eine Schnittstelle (29) einschließt, die zum schnittstellentechnischen Koppeln mit der Steuereinheit (15) der Fülleinheit (10) und zum Bereitstellen der Wiegeinformationen in Bezug auf das Gewicht des Behälters (2) an dieselbe konfiguriert ist.

10. Maschine nach Anspruch 9, wobei die Schnittstelle (29) von einem digitalen Typ einschließlich einer digitalen SPI-Schnittstelle (seriell-parallelen Schnittstelle) ist.

11. Maschine nach Anspruch 9 oder 10, wobei die Wiegeinformationen eine Messung des Abstands (d) einschließen und die Steuereinheit (15) konfiguriert ist, um das Gewicht des Behälters (2) als Funktion des Abstands (d) zu bestimmen.

12. Maschine nach einem der vorhergehenden Ansprüche, wobei der Tragarm (22a) außermittige Belastbarkeit aufweist, um so automatische Drehmomentkompensation bereitzustellen, und an den Rotationsförderer (4) an einem Ende desselben gekoppelt ist und an dem gegenüberliegenden Ende ein Greifelement (22b) trägt, das zum Greifen eines Halses (2') des Behälters (2) konzipiert ist, um diesen während der Füllvorgänge zu halten und zu tragen.

13. Maschine nach einem der vorhergehenden Ansprüche, die eine Anzahl von Fülleinheiten (10), die durch den Rotationsförderer (4) getragen werden, sowie eine entsprechende Anzahl an jeweiligen Wiegevorrichtungen (20) einschließt.

14. Maschine nach Anspruch 13, wobei der Rotationsförderer (4) so montiert ist, dass er um eine Längsachse (A) rotiert und an seiner Peripherie die Fülleinheiten (10) trägt, wobei die Fülleinheiten (10) zur Bewegung entlang eines Pfades (P) durch die Rotation des Rotationsförderers (4) konzipiert sind.

## Revendications

1. Machine de remplissage (1), comportant : un transporteur rotatif (4) ; au moins une unité de remplissage (10), portée par le transporteur rotatif (4) et conçue pour venir en prise avec au moins un récipient (2) pour effectuer le remplissage de ce dernier avec un produit fluide (13) ; et un dispositif de pesée (20), accouplé fonctionnellement à l'unité de remplissage (10) pour fournir une information de pesée se rapportant à un poids du récipient (2) au cours de son remplissage ; le dispositif de pesée (20) comportant : une unité de support (22), ayant un bras de support (22a) conçu pour retenir le récipient (2) et pour être déformé élastiquement en fonction du poids du récipient (2) en train d'être rempli ; et une unité de détection (24), conçue pour fournir une mesure associée au poids du récipient,
l'unité de détection (24) comportant un élément de détection (25) et étant configurée pour fournir une détection sans contact associée à une distance (d) du bras de support (22a) à une portion lui faisant face de la machine de remplissage (1), le poids du récipient (2) étant une fonction de ladite distance (d),
**caractérisée en ce qu'**une portion du transporteur rotatif (4) à laquelle l'unité de remplissage (10) est accouplée, définit une structure de barrière (16) qui sépare une première zone (18a) de la machine de remplissage (1) d'une deuxième zone distincte (18b) de la machine de remplissage (1), l'élément de détection (25) étant accouplé à la structure de barrière (16) faisant face au bras de support (22a) ; et une connexion électrique (30) à l'unité de détection (24) étant prévue, à travers un passage (31) traversant la structure de barrière (16), pour ainsi s'étendre uniquement dans la deuxième zone (18b) et pas dans la première zone (18a).

2. Machine selon la revendication 1, dans laquelle l'unité de détection (24) est configurée pour fonctionner sur la base d'un couplage inductif électromagnétique.

3. Machine selon la revendication 2, dans laquelle l'élément de détection (25) comporte une bobine d'induction (32a) pour générer un champ magnétique, et l'unité de détection (24) est configurée pour détecter des effets électromagnétiques dus à des courants de Foucault générés dans le bras de support (22a), le bras de support (22a) comportant un matériau conducteur.

4. Machine selon la revendication 3, dans laquelle l'élément de détection (25) comporte en outre un condensateur parallèle (32b) accouplé à la bobine d'induction (32a) pour former un résonateur LC (32) ; l'unité de détection (24) comportant un circuit de commande (27) configuré pour commander, à sa fréquence de résonance, ledit résonateur LC (32), pour ainsi générer le champ magnétique.

5. Machine selon la revendication 2, dans laquelle l'unité de détection (24) est configurée pour fournir un transformateur électromagnétique et pour détecter la variation d'une inductance de celui-ci, en fonction de la déformation élastique du bras de support (22a), le bras de support (22a) comportant une région (35) en matériau ferromagnétique ou en ferrite.

6. Machine selon la revendication 5, dans laquelle l'élément de détection (25) comporte un noyau magnétique (36) avec une bobine d'enroulement (38), séparée de la région magnétique (35) par le biais d'un entrefer (39) dont la valeur est fonction de ladite distance (d).

7. Machine selon l'une quelconque des revendications précédentes, dans laquelle la première zone (18a) est une zone dans laquelle des conditions aseptiques doivent être conservées et dans laquelle le récipient (2) doit être rempli avec le produit (13) ; et dans laquelle la deuxième zone (18b) est une zone non aseptique.

8. Machine selon l'une quelconque des revendications précédentes, dans laquelle l'unité de support (22) est d'un type purement mécanique et ne comporte pas de pièces ou de composants électroniques.

9. Machine selon l'une quelconque des revendications précédentes, dans laquelle l'unité de remplissage (10) comporte une unité de commande (15) configurée pour commander des opérations de remplissage dudit récipient (2) ; et dans laquelle l'unité de détection (24) comporte une interface (29) configurée pour réaliser l'interface avec l'unité de commande (15) de l'unité de remplissage (10) et pour fournir à celle-ci l'information de pesée se rapportant au poids du récipient (2).

10. Machine selon la revendication 9, dans laquelle l'interface (29) est d'un type numérique, y compris une interface numérique SPI (Interface Parallèle Série).

11. Machine selon la revendication 9 ou 10, dans laquelle ladite information de pesée comporte une mesure de distance (d), et l'unité de commande (15) est configurée pour déterminer le poids du récipient (2) en fonction de ladite distance (d).

12. Machine selon l'une quelconque des revendications précédentes, dans laquelle le bras de support (22a) a une capacité décentrée, de manière à fournir une compensation automatique du couple, et est accouplé au transporteur rotatif (4) à une de ses extrémités, et porte, à une extrémité opposée, un élément de préhension (22b) qui est conçu pour saisir un goulot (2') du récipient (2), pour ainsi le retenir et le supporter au cours d'opérations de remplissage.

13. Machine selon l'une quelconque des revendications précédentes, comportant un certain nombre d'unités de remplissage (10) portées par le transporteur rotatif (4), et un nombre correspondant de dispositifs de pesée respectifs (20).

14. Machine selon la revendication 13, dans laquelle le transporteur rotatif (4) est monté de manière à tourner autour d'un axe longitudinal (A), et porte les unités de remplissage (10) au niveau de sa périphérie, les unités de remplissage (10) étant conçues pour être déplacées le long d'un trajet (P) par la rotation du transporteur rotatif (4).
